# EUROPÄISCHE PATENTSCHRIFT

(11) **EP 0 738 238 B1**
(45) Veröffentlichungstag und Bekanntmachung des Hinweises auf die Patenterteilung: **06.08.1997**
(21) Anmeldenummer: 95904532.9
(22) Anmeldetag: 23.12.1994
(51) Int. Cl.: C02F 11/08

(54) **VERFAHREN ZUR NASSOXIDATIVEN BEHANDLUNG VON ORGANISCHEN SCHADSTOFFEN IN ABWÄSSERN**
PROCESS FOR THE WET-OXIDISING TREATMENT OF ORGANIC POLLUTANTS IN WASTE WATER
PROCEDE DE TRAITEMENT PAR OXYDATION PAR VOIE HUMIDE DE MATIERES POLLUANTES ORGANIQUES DANS DES EAUX USEES

(30) Priorität: 07.01.1994 DE 4400243
(43) Veröffentlichungstag der Anmeldung: 23.10.1996
(73) Patentinhaber: BAYER AG, 51368 Leverkusen (DE)
(72) Erfinder: HOLZER, Klaus, D-51381 Leverkusen (DE); HORAK, Otto, D-51375 Leverkusen (DE); MELIN, Thomas, D-51061 Köln (DE)
(86) Internationale Anmeldenummer: EP9404301
(87) Internationale Veröffentlichungsnummer: WO9518769

(56) Entgegenhaltungen:
- EP-A- 0 010 713
- EP-A- 0 284 754
- EP-A- 0 461 385
- CH-A- 623 798

## Beschreibung

Die Erfindung geht aus von einem Verfahren zum naßoxidativen Abbau von organischen Schadstoffen in Abwässern durch Zugabe von reinem Sauerstoff oder eines sauerstoffhaltigen Gases bei Temperaturen von 80° bis 330° und Drucken von 1 bar bis 200 bar.

Um die zur Oxidation notwendigen Temperaturen (und infolgedessen auch Drücke) zu senken, ist bereits beschrieben worden, die organisch belasteten Abwässer mit Sauerstoff oder sauerstoffhaltigen Gasen bei einem Redoxpotential von 300 bis 600 mV zu behandeln, wobei das Redoxpotential durch Zugabe von Redoxsystemen, vorzugsweise Fe⁺⁺ oder Fe⁺⁺⁺-Ionen eingestellt wird. Auf diese Weise gelingt es, die Reaktionstemperatur auf deutlich unterhalb 250° zu senken. Weiterhin ist bekannt, daß sich die Reaktionstemperatur noch weiter erniedrigen läßt, wenn man dem Abwasser bei der Naßoxidation als Cokatalysatoren Benzo- oder Naphthochinone zusetzt. Dieses Verfahren wird in DE-A-33 16 265 und in dem Artikel von O. Horak in Chem. Ing. Techn. 62 (1990) Nr. 7, S. 555-557 beschrieben.

Es wurde nun gefunden, daß sich anstelle der in DE-A-33 16 265 genannten Chinone Klärschlamm als Cokatalysator einsetzen läßt. Der Klärschlamm kann dabei entweder als Überschußschlamm aus einer industriellen Kläranlage oder als Faulturmschlamm aus einer kommunalen Kläranlage stammen. Auf diese Weise kann auf die teuren chinoiden Chemikalien oder auf aufwendige Vorbehandlungsmaßnahmen wie sie in DE 33 16 265 beschrieben sind, verzichtet werden. Gleichzeitig läßt sich auf diese Weise ein Großteil des biologischen Überschußschlammes oxidativ beseitigen.

Gegenstand der Erfindung ist daher ein Verfahren zum naßoxidativen Abbau von organischen Schadstoffen in Abwässern durch Zugabe von reinem Sauerstoff oder eines sauerstoffhaltigen Gases bei einer Temperatur von 80° bis 330°C, vorzugsweise bei 120°C bis 220°C, einem Druck von 1 bar bis 200 bar, vorzugsweise 3 bar bis 50 bar und einem pH-Wert <7, vorzugsweise <4, dadurch gekennzeichnet ist, daß der naßoxidative Abbau in Gegenwart von Eisen und von Faulturmschlamm oder Überschußschlamm aus einer biologischen Kläranlage durchgeführt wird.

Vorzugsweise wird dem Abwasser der Faulturmschlamm oder Überschußschlamm in einer Menge von 1 g bis 150 g, vorzugsweise 3 g bis 30 g, Schlammtrockensubstanz pro Liter Abwasser zugeführt.

Zweckmäßig wird das nach der Naßoxidation saure Abwasser durch Zugabe von Alkali neutralisiert oder basisch eingestellt.

Eine Weiterentwicklung besteht darin, daß das basische Abwasser durch eine Strippkolonne geleitet wird, um das bei der Naßoxidation organischer Stickstoffverbindungen entstandene Ammonium zu entfernen und als Ammoniaklösung wiederzugewinnen. Die wiedergewonnene Ammoniaklösung kann dann vorteilhaft als Reduktionsmittel bei der katalytischen Entstickung von Rauchgasen eingesetzt werden.

Bei der Alkalisierung des von der Naßoxidation kommenden sauren Abwassers können gegebenenfalls Schwermetallhydroxide ausfallen. Diese werden in einem gesonderten Schritt zweckmäßig abfiltriert und getrennt entsorgt. Das basische und von Schwermetallhydroxiden befreite Abwasser wird dann in vorteilhafter Weise einer biologischen Kläranlage zugeführt.

Eine weitere Verbesserung besteht darin, daß das vom Ammonium befreite Abwasser in die Denitrifikationsstufe einer biologischen Kläranlage geleitet wird.

Mit der Erfindung werden folgende Vorteile erzielt:
- Der Zusatz von teuren chinoiden Chemikalien, bzw. die aufwendige Erzeugung von Chinonen in einer Vorstufe der Abwasserbehandlung kann entfallen.
- Gleichzeitig läßt sich der Problemstoff Klärschlamm kostengünstig beseitigen.
- Der bei der Oxidation entstandene Ammoniak kann problemlos zurückgewonnen und einer Wiederverwertung zugeführt werden

Im folgenden wird die Erfindung anhand von Vergleichsbeispielen und mit Hilfe eines Verfahrensschemas näher erläutert.

Einem Rohabwasser mit einem CSB-Gehalt im Bereich von 1 bis 200 g/l wird Klärschlamm mit einer Konzentration von etwa 10 bis 20 g Trockensubstanz pro Liter Abwasser sowie zusätzlich Eisenionen in Form von Eisensalzen mit einer Konzentration von ca. 0,3 bis 0,5 g Fe⁺⁺/l zugesetzt und die Mischung mit H₂SO₄ auf pH = 1,5 bis 2 angesäuert. Das saure Abwasserschlammgemisch wird über eine Pumpe 1 auf einen Prozeßdruck von ca. 20 bar gebracht, in einem Gegenstromwärmeaustauscher 2 erhitzt und anschließend in den Oxidationsreaktor 3 eingeleitet. Als Oxidationsreaktor 3 dient eine Blasensäulenkolonne, in die reiner Sauerstoff über Injektoren am Kolonnenboden feinblasig eingedüst wird. Die Oxidationsreaktion läuft vorzugsweise im Temperaturbereich von 120°C bis 220°C bei einer Verweilzeit von 1 bis 3 Stunden ab. Dabei werden die organischen Schadstoffe im Abwasser zu CO₂ und Wasser oxidiert. Beim Anfahren wird der Oxidationsreaktor 3 mit Dampf vorgeheizt. Im weiteren Verlauf läuft der Prozeß autotherm ab.

Das behandelte Abwasser fließt vom Kopf des Oxidationsreaktors 3 zum Gegenstromwärmetauscher 2 und wird dort auf etwa 100°C abgekühlt. Anschließend werden gasförmige Bestandteile in einem Zyklonenabscheider 4 vom Abwasser getrennt und entspannt. Es entsteht eine geringe Menge Abgas, das neben CO₂ auch CO enthält und in bekannter Weise nachbehandelt werden kann.

Bei der Naßoxidation im Reaktor 3 werden organische Stickstoffverbindungen zu Ammonium umgewandelt. Wird das aus dem Abscheider 4 austretende Abwasser durch Zugabe von Alkali z.B. NaOH alkalisiert, so kann das Ammonium in einer nachgeschalteten Strippkolonne 5 in Form von Ammoniak aus dem Abwasser entfernt werden. Der zurückgewonnene Ammoniak kann vorteilhaft als Reduktionsmittel bei der katalytischen Entstickung von Rauchgasen eingesetzt werden.

Bei der Naßoxidation im Reaktor 3 gehen gegebenenfalls auch im Abwasser vorhandene Schwermetalle in Lösung. Diese werden bei der Alkalisierung zu Hydroxiden umgewandelt und lassen sich nach Kühlung im Wärmetauscher 6 in einem Sedimentationsgefäß 7 als Feststoffe abtrennen. Der abgetrennte Feststoff kann dann in einer Filterpresse 8 entwässert werden. Die entwässerten Metallhydroxide werden dann einer separaten Entsorgung zugeführt während die flüssige Phase in die Abwasserleitung 9 zurückgeführt wird. Das behandelte, von Ammonium und Schwermetallverbindungen befreite Abwasser enthält noch organische Fragmente, die biologisch gut abbaubar sind. Aus diesen Grund ist die Abwasserleitung 9 mit einer konventionellen biologischen Kläranlage verbunden, wo das Abwasser direkt in eine gegebenenfalls vorhandene Denitrifikationsstufe eingeleitet werden kann.

### Beispiel 1 Nach dem Stand der Technik

Ein Mischabwasser mit einem Gesamt CSB-Wert (chemischer Sauerstoffbedarf) von 52,5 g/l und einem AOX-Gehalt von 17 mg/l wurde in einem Autoklaven 3 Stunden bei 190°C und 18 bar mit Sauerstoff oxidiert. Der CSB-Wert von 52,5 ergab sich für das feststoffhaltige Rohabwasser. Nach Abfiltration der Feststoffe betrug der CSB-Wert 48,4. Beide Werte sind in Spalte 2 der Tabelle 1 eingetragen. Bei diesem Beispiel wurden nur Eisenionen in einer Konzentration von 0,3 g/l zugesetzt. Das Ergebnis war eine CSB-Reduktion auf 32,0 g/l (39 %) und eine Reduzierung des AOX (adsorbierbare organische Halogenverbindungen) auf 3 mg/l (82 %). Diese Werte sind in Spalte 3 von Tabelle 1 eingetragen.

### Beispiel 2 Nach dem Stand der Technik

Bei dem gleichen Rohabwasser mit einem CSB-Gehalt von 52,5 g/l wurden zusätzlich zu den Eisenionen noch Chinone als Cokatalysatoren zugefügt und die Naßoxidation dann unter den gleichen Bedingungen durchgeführt wie in Beispiel 1. Die Chinone wurden wie in DE 33 16 265 durch direkte Zugabe von 5 g/l Braunkohlenstaub in das erhitzte alkalische Rohabwasser gewonnen. Anschließend wurde das Abwasser mit H₂SO₄ angesäuert und mit Sauerstoff oxidiert. Der CSB-Gehalt des Abwassers konnte aufgrund dieser Behandlung auf 21,0 g/l (60 %) reduziert werden. Der AOX-Gehalt ging auf 2 mg/l zurück. Diese Werte sind in Spalte 3 der Tabelle 1 eingetragen.

### Beispiel 3 (Erfindung)

Dem mit Eisen versetzten Mischabwasser gemäß Beispiel 1 wurden in einem ersten Versuch Klärschlamm aus dem Faulturm einer kommunalen Kläranlage mit einer Konzentration von 6 g Trockensubstanz pro Liter Abwasser (TS/P)und in einem zweiten Versuch mit einer Konzentration von 12 g TS/l Abwasser zugesetzt. Die Schlammtrockensubstanz hatte einen organischen Anteil von ca. 50 %. Die Naßoxidation wurde wieder unter den gleichen Bedingungen wie unter Beispiel 1 beschrieben, durchgeführt.

Wie die in den Spalten 5 und 6 der Tabelle dargestellten Ergebnisse zeigen, konnte der CSB-Wert durch den katalytischen Effekt der Klärschlammzugabe auf 23,3 g/l (56 %) bzw. 20,7 g/l (60,5 %) reduziert werden. Damit wurde das gleiche Oxidationsergebnis wie bei der Zugabe von Chinonkatalysatoren gemäß Beispiel 2 erzielt. Die geringen CSB-Unterschiede zwischen unfiltrierten und filtrierten Proben bei dem zweiten Versuch (20,7 g/l und 20,5 g/l) zeigen, daß der organische Schlammanteil fast vollständig oxidiert wird.

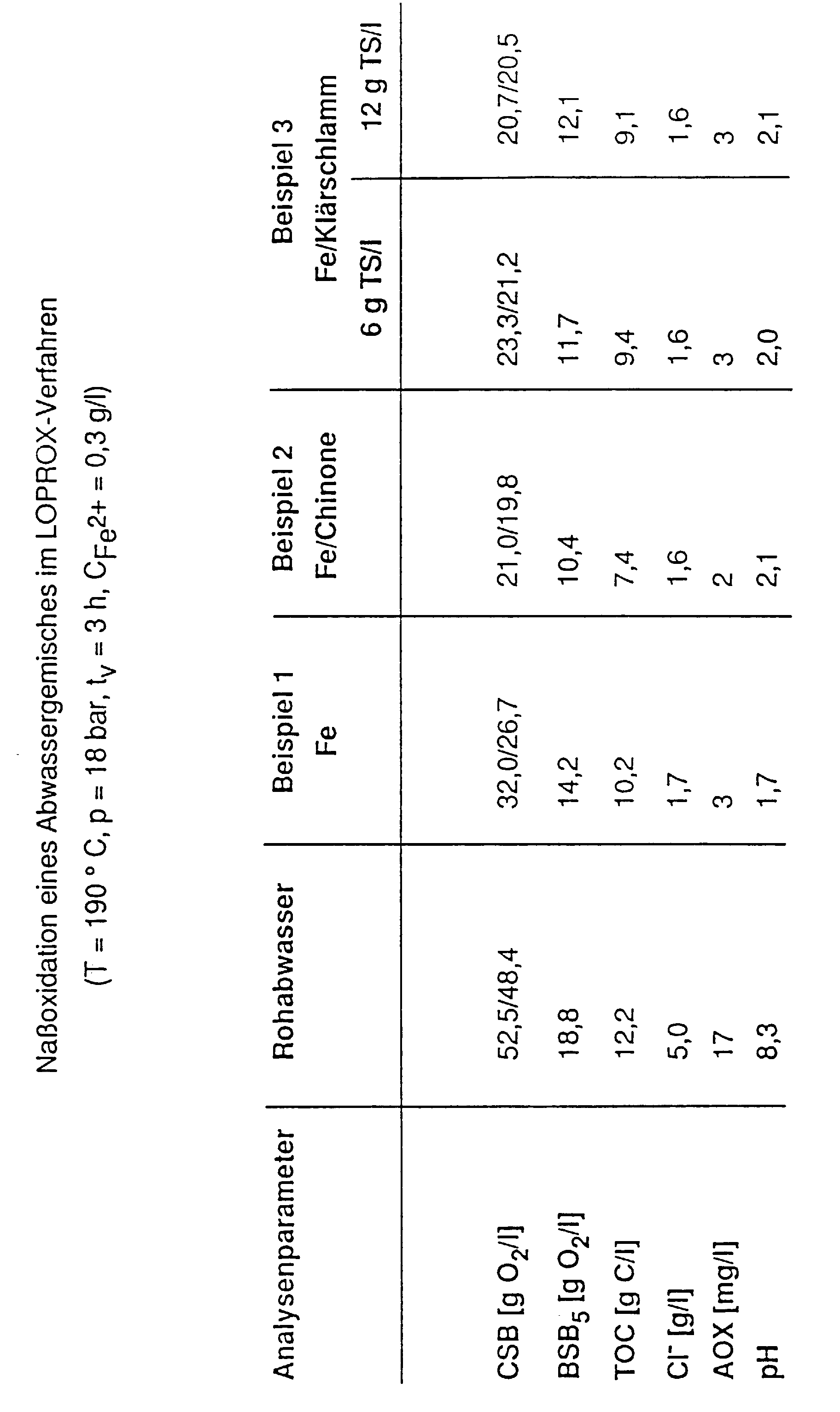

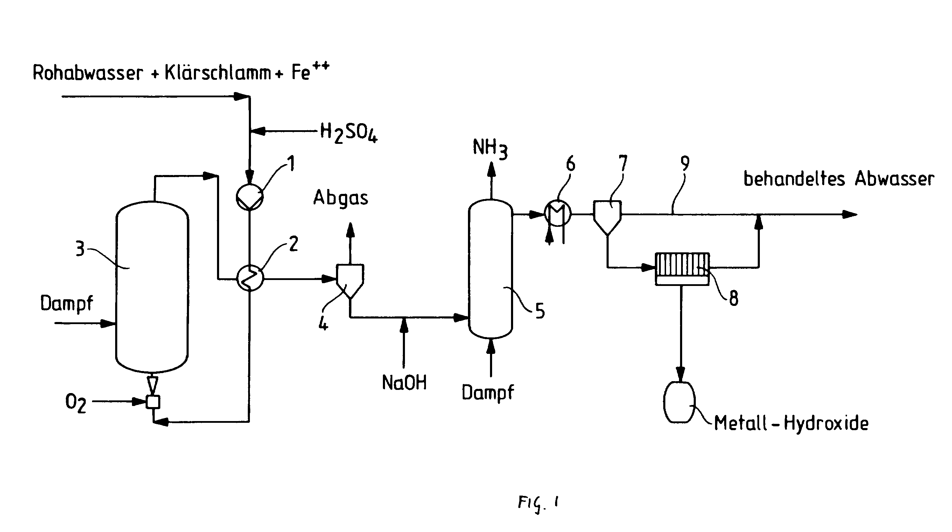

## Patentansprüche

1. Verfahren zum naßoxidativen Abbau von organischen Schadstoffen in Abwässern durch Zugabe von reinem Sauerstoff oder eines sauerstoffhaltigen Gases bei Temperaturen von 80°C bis 330°C, vorzugsweise bei 120°C bis 220°C, Drucken von 1 bis 200 bar, vorzugsweise 3 bis 50 bar und bei einem pH-Wert <7, vorzugsweise <4, dadurch gekennzeichnet, daß der naßoxidative Abbau in Gegenwart von Eisen und von Faulturmschlamm oder Überschußschlamm aus einer biologischen Kläranlage durchgeführt wird.

2. Verfahren nach Anspruch 1, dadurch gekennzeichnet, daß dem Abwasser in Gegenwart von Eisenionen der Faulturmschlamm oder Überschußschlamm in einer Menge von 1 g bis 150 g, vorzugsweise 3 g bis 30 g Schlamm-Trockensubstanz pro Liter Abwasser zugeführt wird.

3. Verfahren nach Anspruch 1 bis 2, dadurch gekennzeichnet, daß nach der Naßoxidation das saure Abwasser durch Zugabe von Alkali neutralisiert oder basisch eingestellt wird.

4. Verfahren nach Anspruch 3, dadurch gekennzeichnet, daß das basische Abwasser durch eine Strippkolonne geleitet wird, um das bei der Naßoxidation organischer Stickstoffverbindungen entstandene Ammonium zu entfernen und als Ammoniaklösung wiederzugewinnen.

5. Verfahren nach Anspruch 4, dadurch gekennzeichnet, daß die wiedergewonnene Ammoniaklösung als Reduktionsmittel bei der katalytischen Entstickung von Rauchgasen wiederverwertet wird.

6. Verfahren nach Anspruch 3 bis 4, dadurch gekennzeichnet, daß die nach der Naßoxidation im Abwasser durch Zugabe von Alkali ausgefallenen Schwermetallhydroxide abfiltriert und getrennt entsorgt werden.

7. Verfahren nach Anspruch 3 bis 6, dadurch gekennzeichnet, daß das neutralisierte oder basische Abwasser einer biologischen Kläranlage zugeführt wird.

8. Verfahren nach Anspruch 4, dadurch gekennzeichnet, daß das vom Ammonium befreite Abwasser in die Denitrifikationsstufe einer biologischen Kläranlage geleitet wird.

## Claims

1. A process for the degradation of organic pollutants in waste water by wet oxidation, in which pure oxygen or an oxygen-containing gas is added at temperatures of from 80°C to 330°C, preferably at from 120°C to 220°C, under pressures of from 1 to 200 bar, preferably from 3 to 50 bar, and at a pH value <7, preferably <4, characterised in that degradation by wet oxidation is carried out in the presence of iron and digested sludge or excess sludge from a biological sewage treatment plant.

2. A process according to claim 1, characterised in that the digested sludge or surplus sludge is added to the waste water in the presence of iron ions in an amount of from 1 g to 150 g, preferably from 3 g to 30 g, of dry sludge matter per litre of waste water.

3. A process according to claims 1 and 2, characterised in that, after the wet oxidation, the acidic waste water is neutralised or alkalised by the addition of alkali.

4. A process according to claim 3, characterised in that the basic waste water is passed through a stripping column, to remove the ammonium arising during the wet oxidation of organic nitrogen compounds and to recover it as ammonia solution.

5. A process according to claim 4, characterised in that the recovered ammonia solution is reused as a reducing agent in the catalytic removal of nitrogen from waste gases.

6. A process according to claims 3 and 4, characterised in that the heavy metal hydroxides precipitated in the waste water by the addition of alkali after wet oxidation are filtered off and disposed of separately.

7. A process according to claims 3 to 6, characterised in that the neutralised or basic waste water is fed to a biological sewage treatment plant.

8. A process according to claim 4, characterised in that the waste water freed of ammonium is introduced into the denitrification stage of a biological sewage treatment plant.

## Revendications

1. Procédé pour la dégradation par oxydation au mouillé des substances organiques polluantes contenues dans des eaux usées par addition d'oxygène pur ou d'un gaz contenant de l'oxygène à des températures de 80 à 330°C, de préférence de 120 à 220°C, des pressions de 1 à 200 bars, de préférence de 3 à 50 bars et un pH inférieur à 7, de préférence inférieur à 4, caractérisé en ce que la dégradation par oxydation au mouillé est réalisée en présence de fer et de boues de tour de putréfaction ou de boues en excès provenant d'une installation de clarification biologique.

2. Procédé selon la revendication 1, caractérisé en ce que l'on ajoute aux eaux usées, en présence d'ions fer, les boues de tour de putréfaction ou boues en excès en quantités de 1 à 150 g, de préférence de 3 à 30 g de matières sèches de boues par litre des eaux usées.

3. Procédé selon revendications 1 à 2, caractérisé en ce que, après l'oxydation au mouillé, on neutralise ou on alcalinise les eaux usées acides par addition d'un alcali.

4. Procédé selon la revendication 3, caractérisé en ce que l'on envoie les eaux usées basiques dans une colonne d'entraînement dans laquelle on élimine l'ammonium formé à l'oxydation au mouillé à partir des composés organiques azotés et on le récupère à l'état d'ammoniaque.

5. Procédé selon la revendication 4, caractérisé en ce que l'on utilise l'ammoniaque récupérée en tant qu'agent réducteur à l'épuration catalytique des gaz de fumées.

6. Procédé selon les revendications 3 à 4, caractérisé en ce que l'on sépare par filtration et on rejette séparément les hydroxydes de métaux lourds qui ont précipité à l'addition d'alcali après l'oxydation au mouillé.

7. Procédé selon les revendications 3 à 6, caractérisé en ce que l'on envoie les eaux usées neutralisées ou basiques dans une installation de clarification biologique.

8. Procédé selon la revendication 4, caractérisé en ce que les eaux usées débarrassées de l'ammonium sont envoyées au stade de dénitrification d'une installation de clarification biologique.
